# EUROPEAN PATENT APPLICATION

(11) **EP 4 570 498 A1**
(43) Date of publication of application: **18.06.2025**
(21) Application number: 24219405.8
(22) Date of filing: 12.12.2024
(51) Int. Cl.: B32B 27/08, B32B 27/36

(54) **BIODEGRADABLE BIAXIALLY ORIENTED FILM, PREPERATION METHOD THEREOF, AND ENVIRONMENT-FRIENDLY PACKING MATERIAL COMPRISING THE SAME**

(30) Priority: 12.12.2023 KR 20230179967
(71) Applicant: SK microworks Co., Ltd., Suwon-si, Gyeonggi-do 16336 (KR)
(72) Inventor: LEE, Seok In, Suwon-si (KR); JEONG, Bich Nam, Suwon-si (KR); HAN, Kweon Hyung, Suwon-si (KR)
(74) Representative: Dehns

(57) **Abstract**

The present invention relates to a biodegradable biaxially oriented film, to a process for preparing the same, and to an environmentally friendly packaging material comprising the same. The biodegradable biaxially oriented film comprises a first outer layer; a second outer layer; and a core layer interposed between the first outer layer and the second outer layer, wherein the core layer has a multilayer structure in which a first resin layer and a second resin layer are alternately laminated, the first resin layer comprises a first composition comprising a polylactic acid-based polymer, the second resin layer comprises a second composition comprising a polyhydroxyalkanoate-based polymer, and the first outer layer and the second outer layer each comprise the first composition, wherein the content of the polyhydroxyalkanoate-based polymer is 20% by weight or more based on the total weight of the first composition and the second composition contained in the first outer layer, the second outer layer, and the core layer.

## Description

### Technical Field

The present invention relates to a biodegradable biaxially oriented film, to a preparation method thereof, and to an environment-friendly packaging material comprising the same.

### Background Art of the Invention

Plastic films commonly used for packaging purposes include cellophane, polyvinyl chloride (PVC), polyethylene (PE), polypropylene (PP), nylon, and polyethylene terephthalate (PET).

However, cellophane films cause severe environmental pollution during the preparation process; thus, their production is subject to a lot of regulations. Polyvinyl chloride films generate harmful substances such as dioxin when incinerated; thus, their use is subject to a lot of regulations. In addition, polyethylene films lack thermal resistance and mechanical properties; thus, their use is limited except for low-quality packaging purposes. Polypropylene, nylon, and polyethylene terephthalate have relatively stable molecular structures and good mechanical properties. However, when they are used for packaging purposes and then landfilled without special treatment, they are hardly decomposed due to their chemical and biological stability and accumulate in the ground, thereby shortening the lifespan of the landfill and causing the problem of soil contamination.

To overcome the shortcomings of these non-degradable plastic films, films made from biodegradable resins have recently been used. Biodegradable materials refer to materials that can be decomposed by organisms such as bacteria and microorganisms under certain conditions. Certain composting conditions are required depending on the biodegradability of biodegradable materials. For example, the composting conditions may be classified into industrial composting conditions, household composting conditions, soil composting conditions, and marine composting conditions when the temperature, humidity, or time required for decomposition is taken into consideration.

Polylactic acid (PLA) films, which have excellent mechanical and optical properties, are being used in various ways as biodegradable resins. However, polylactic acid films lack flexibility and are noisy due to their unique crystal structure. Since they can be decomposed in industrial composting facilities that require high temperatures and humidity, they do not meet the household or soil composting standards; thus, their uses are limited.

To improve this problem, a method of preparing a film using a biodegradable aliphatic polyester alone, other than polylactic acid, may be adopted. However, aliphatic polyesters with excellent biodegradability that meet the household or soil composting standards generally have low melting points and glass transition temperatures, making it difficult to prepare films by a biaxial stretching method, and the mechanical strength of the final films may be low, and the thermal shrinkage rate thereof may be high, which may deteriorate processability, productivity, and moldability.

Accordingly, there is a need for research on biodegradable films that are biodegradable under the household or soil composting conditions, have excellent optical, thermal, and mechanical properties, can be easily prepared by a biaxial stretching method, and generate little noise.

### Prior Art Documents

### Patent Documents

Japanese Laid-open Patent Publication No. 2006-272712

### Disclosure of the Invention

### Technical Problem to Solve

The invention is devised to solve the problems of the prior art discussed above.

An embodiment aims to provide a biodegradable biaxially oriented film (e.g. a film prepared by the process herein described) having improved mechanical properties, flexibility, transparency, and noise levels, along with high biodegradability even under mild composting conditions, by controlling the components and composition of each resin layer contained in the biodegradable biaxially oriented film having a multilayer structure.

Another embodiment aims to provide a process for preparing a biodegradable biaxially oriented film (e.g. a film as herein described), wherein the properties of the biodegradable biaxially oriented film are controlled to an optimal range.

Another embodiment aims to provide an environmentally friendly and high-quality packaging material that is biodegradable even under mild conditions by using a biodegradable biaxially oriented film (e.g. the biodegradable biaxially oriented film as herein described) with improved properties.

### Solution to the Problem

An embodiment to accomplish the above object provides a biodegradable biaxially oriented film (e.g. a film prepared by the process herein described), which comprises a first outer layer; a second outer layer; and a core layer interposed between the first outer layer and the second outer layer, wherein the core layer has a multilayer structure in which a first resin layer and a second resin layer are alternately laminated, the first resin layer comprises a first composition comprising a polylactic acid-based polymer, the second resin layer comprises a second composition comprising a polyhydroxyalkanoate-based polymer, and the first outer layer and the second outer layer each comprise the first composition, wherein the content of the polyhydroxyalkanoate-based polymer is 20% by weight or more based on the total weight of the first composition and the second composition contained in the first outer layer, the second outer layer, and the core layer.

Another embodiment provides a process for preparing a biodegradable biaxially oriented film (e.g. a film as herein described), which comprises preparing a first composition comprising a polylactic acid-based polymer and a second composition comprising a polyhydroxyalkanoate-based polymer, respectively; melt-extruding the first composition and the second composition, respectively, to obtain a sheet in which a resin layer comprising the first composition and a resin layer comprising the second composition are alternately laminated; and biaxially stretching and heat-setting the laminated sheet to obtain a biaxially oriented film, wherein the content of the polyhydroxyalkanoate-based polymer is 20% by weight or more based on the total weight of the first composition and the second composition.

Another embodiment provides an environmentally friendly packaging material, which comprises a biodegradable biaxially oriented film (e.g. the biodegradable biaxially oriented film as herein described), wherein the biodegradable biaxially oriented film comprises a first outer layer; a second outer layer; and a core layer interposed between the first outer layer and the second outer layer, wherein the core layer has a multilayer structure in which a first resin layer and a second resin layer are alternately laminated, the first resin layer comprises a first composition comprising a polylactic acid-based polymer, the second resin layer comprises a second composition comprising a polyhydroxyalkanoate-based polymer, and the first outer layer and the second outer layer each comprise the first composition, wherein the content of the polyhydroxyalkanoate-based polymer is 20% by weight or more based on the total weight of the first composition and the second composition contained in the first outer layer, the second outer layer, and the core layer.

### Advantageous Effects of the Invention

The biodegradable biaxially oriented film according to an embodiment comprises a core layer having a multilayer structure in which a resin layer comprising a first resin composition comprising a polylactic acid-based polymer and a resin layer comprising a second resin composition comprising a polyhydroxyalkanoate-based polymer are alternately laminated, an outer layer comprising the first resin composition is positioned on both sides of the core layer, and the polyhydroxyalkanoate-based polymer is employed in a predetermined amount, whereby flexibility and transparency are improved, while noise reduction effects and biodegradability can be enhanced.

In addition, the process for preparing a biodegradable biaxially oriented film according to an embodiment can further enhance moldability, processability, and productivity.

In addition, the biodegradable biaxially oriented film according to an embodiment has a multilayer structure, so that each individual layer can have a thin thickness, thereby enhancing the penetration of organisms such as bacteria and microorganisms, which enables biodegradation even under mild conditions such as the household or soil composting standards. Accordingly, since it has environmentally friendly features as it completely decomposes when landfilled, it can be used in various fields as a packaging material to provide a high-quality, environmentally friendly packaging material.

### Brief Description of the Drawing

Fig. 1 is a schematic diagram of a biodegradable biaxially oriented film according to an embodiment of the present invention.
Fig. 2 is a schematic perspective view of a biodegradable biaxially oriented film according to an embodiment of the present invention.

### Detailed Description for Carrying out the Invention

Hereinafter, the present invention will be described in detail with reference to various embodiments. The embodiments are not limited to those described below. Rather, they can be modified into various forms as long as the gist of the invention is not altered.

In the present specification, terms referring to the respective components are used to distinguish them from each other and are not intended to limit the scope of the embodiment. In addition, in the present specification, a singular expression is interpreted to cover a singular or plural number as well unless otherwise specified in the context.

Throughout the present specification, when a part is referred to as "comprising" an element, it is understood that other elements may be comprised, rather than other elements are excluded, unless specifically stated otherwise.

All numbers expressing the physical properties, dimensions, and the like of elements used herein are to be understood as being modified by the term "about" unless otherwise indicated.

Throughout the present specification, the terms "first," "second," and the like are used to describe various components. But the components should not be limited by the terms. The terms are used only for the purpose of distinguishing one component from another.

In the present specification, in the case where an element is mentioned to be formed or positioned on or under another element, it means all of the cases where one element is directly, or indirectly through another element, formed or positioned on or under another element. In addition, it should be understood that the criterion for the terms on and under for each component may vary depending on the direction in which the object is observed.

In the numerical range that limits the size of components, physical properties, and the like described in the present specification, when a numerical range limited with the upper limit only and a numerical range limited with the lower limit only are separately exemplified, it should be understood that a numerical range combining these upper and lower limits is also encompassed in the exemplary scope.

In addition, for the sake of description, the sizes of individual elements in the appended drawings may be exaggeratedly depicted and do not indicate the actual sizes. In addition, the same reference numerals refer to the same elements throughout the specification.

A polylactic acid polymer, a representative biodegradable polymer, is attracting attention as a film material to replace petroleum-based polyester films. However, when a polylactic acid polymer is employed in a film, a relatively loud crackling sound is generated when the film is used, which is regarded as a disadvantage that prevents the film from being used as a packaging material. In particular, when films containing a polylactic acid polymer are used as everyday food packaging materials such as snack bags and bread bags, this crackling sound can act as noise that causes an unpleasant sensation to users. Since consumers are reluctant to choose products that generate unnecessary loud noises, it is important to provide biodegradable films that do not generate unnecessary noises in order for biodegradable films to replace conventional petrochemical-based films for environmental friendliness purposes.

In addition, although polylactic acid polymers are biodegradable, they require a high temperature of about 60°C and a humidity of 50 RH% or more for 6 months to decompose; thus, they can be decomposed in industrial composting facilities. Therefore, they are not suitable for household or soil composting in relatively mild conditions, which limits their use. In order to be widely used as a biodegradable film, it is important to provide a film that can be decomposed even under room temperature conditions when landfilled.

In an embodiment, there is provided a biodegradable biaxially oriented film with excellent flexibility, transparency, and biodegradability, along with improved noise levels, which comprises a first outer layer; a second outer layer; and a core layer interposed between the first outer layer and the second outer layer, wherein the core layer has a multilayer structure in which a first resin layer and a second resin layer are alternately laminated, the first resin layer comprises a first composition comprising a polylactic acid-based polymer, the second resin layer comprises a second composition comprising a polyhydroxyalkanoate-based polymer, and the first outer layer and the second outer layer each comprise the first composition, wherein the content of the polyhydroxyalkanoate-based polymer is 20% by weight or more based on the total weight of the first composition and the second composition contained in the first outer layer, the second outer layer, and the core layer.

### [Biodegradable biaxially oriented film]

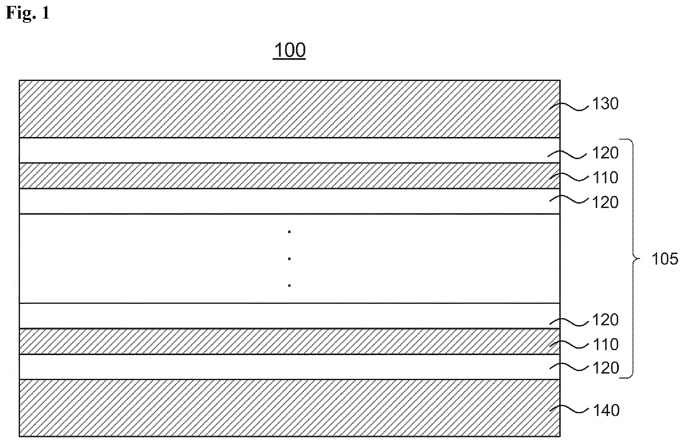

Fig. 1 is a schematic diagram of a biodegradable biaxially oriented film according to an embodiment of the present invention.

In the embodiments of the present invention, the biodegradable biaxially oriented film (100) comprises a first outer layer (130); a second outer layer (140); and a core layer (105) interposed between the first outer layer (130) and the second outer layer (140).

The first outer layer (130) and the second outer layer (140) may be disposed facing each other on both sides of the core layer (105), respectively. For example, the first outer layer (130) may be formed on one side of the core layer (105), and the second outer layer (140) may be formed on the other side of the core layer (105).

The core layer (105) comprises a multilayer structure in which a first resin layer (110) and a second resin layer (120) having different resin compositions are alternately laminated. For example, the core layer (105) may be a laminate in which a first resin layer (110) and a second resin layer (120) are alternately and repeatedly laminated.

The first resin layer (110) comprises a first composition, and the second resin layer (120) comprises a second composition. The first outer layer (130) and the second outer layer (140) comprise the first composition.

The first composition comprises a polylactic acid (PLA)-based polymer. The second composition comprises a polyhydroxyalkanoate (PHA)-based polymer.

The polylactic acid-based polymer is based on biomass, unlike petroleum-based resins. Thus, it can be utilized as a renewable resource and can help reduce carbon dioxide emissions. In addition, since it is biodegradable, it can be decomposed more quickly by moisture, microorganisms, and bacteria than petroleum-based resins; thus, it is environmentally friendly.

The polylactic acid-based polymer may comprise L-lactic acid, D-lactic acid, D,L-lactic acid, or a combination thereof. For example, the polylactic acid-based polymer may comprise a copolymer of L-lactic acid and D-lactic acid.

The polylactic acid-based polymer may comprise D-lactic acid in an amount of 1% by mole or more. For example, it may comprise D-lactic acid in an amount of 1% by mole to 12% by mole. Specifically, the content of D-lactic acid contained in the polylactic acid-based polymer may be 1% by mole or more, 2% by mole or more, 3% by mole or more, or greater than 3% by mole, and 12% by mole or less, 10% by mole or less, 9% by mole or less, 8% by mole or less, 7% by mole or less, 6% by mole or less, or 5% by mole or less. For example, the polylactic acid-based polymer may comprise D-lactic acid in an amount of 1% by mole to 10% by mole, 3% by mole to 9% by mole, 3% by mole to 8% by mole, 3% by mole to 7% by mole, 3% by mole to 6% by mole, 3% by mole to 5% by mole, or greater than 3% by mole to 5% by mole. Within the above range, the stretching processability during preparation into a film can be further enhanced, and the thermal resistance characteristics of a film prepared therefrom can be further enhanced.

The polylactic acid-based polymer may have a melt flow index (MI) of 5 g/10 minutes or more at 210°C and 2.16 kg. It may be 8 g/10 minutes or more, 10 g/10 minutes or more, or 12 g/10 minutes or more, and 20 g/10 minutes or less, 18 g/10 minutes or less, 16 g/10 minutes or less, or 15 g/10 minutes or less. For example, the melt flow index (MI) of the polylactic acid-based polymer at 210°C and 2.16 kg may be 5 g/10 minutes to 20 g/10 minutes, 5 g/10 minutes to 18 g/10 minutes, 8 g/10 minutes to 18 g/10 minutes, 10 g/10 minutes to 18 g/10 minutes, 10 g/10 minutes to 16 g/10 minutes, 12 g/10 minutes to 16 g/10 minutes, or 12 g/10 minutes to 15 g/10 minutes. The melt flow index (MI) may be measured by ASTM D1238.

The polylactic acid-based polymer may have a weight average molecular weight (Mw) of 100,000 g/mole to 1,000,000 g/mole, for example, 100,000 g/mole to 800,000 g/mole, 100,000 g/mole to 500,000 g/mole, or 100,000 g/mole to 300,000 g/mole. The weight average molecular weight (Mw) may be measured by gel permeation chromatography (GPC). When the weight average molecular weight (Mw) of the polylactic acid-based polymer is within the above range, the mechanical and optical properties of the biodegradable biaxially oriented film can be further enhanced.

The polyhydroxyalkanoate-based polymer is a thermoplastic natural polyester compound that can be produced by chemical synthesis or microorganisms such as bacteria. The polyhydroxyalkanoate-based polymer has excellent flexibility and biodegradability and can improve noise levels.

The content of the polyhydroxyalkanoate-based polymer is 20% by weight or more based on the total weight of the first composition and the second composition contained in the first outer layer (130), the second outer layer (140), and the core layer (105). In addition, as described below, when the first composition further comprises the polyhydroxyalkanoate-based polymer together with the polylactic acid-based polymer, the content of the polyhydroxyalkanoate-based polymer refers to the total content of the polyhydroxyalkanoate-based polymer contained in the first composition and the second composition.

As the polyhydroxyalkanoate-based polymer is contained in the biodegradable biaxially oriented film (100) while satisfying the above content range, biodegradability is enhanced, so that composting is possible even under relatively mild conditions, and the flexibility and noise reduction effects of the film can be enhanced as well.

The polyhydroxyalkanoate-based polymer may comprise, as a polymerization unit, at least one repeat unit selected from the group consisting of 3-hydroxybutyrate (3HB), 3-hydroxyhexanoate (3HH), 4-hydroxybutyrate (4HB), 3-hydroxyvalerate (3HV), 3-hydroxypropionate (3HP), 5-hydroxyvalerate (5HV), 5-hydroxyhexanoate (5HH), and 6-hydroxyhexanoate (6HH).

The polyhydroxyalkanoate-based polymer may comprise a 3-hydroxybutyrate (3HB) repeat unit. As the polyhydroxyalkanoate-based polymer comprises a 3HB repeat unit, the 3HB residue forms the backbone of the polymer, so that the polyhydroxyalkanoate-based polymer can have a structure more advantageous for biodegradation.

In another embodiment, the polyhydroxyalkanoate-based polymer may comprise, as a polymerization unit, a 3-hydroxybutyrate (3HB) repeat unit and at least one additional repeat unit selected from the group consisting of 3-hydroxyhexanoate (3HH), 4-hydroxybutyrate (4HB), 3-hydroxyvalerate (3HV), 3-hydroxypropionate (3HP), 5-hydroxyvalerate (5HV), 5-hydroxyhexanoate (5HH), and 6-hydroxyhexanoate (6HH).

The polyhydroxyalkanoate-based polymer may comprise a 3-hydroxyhexanoate (3HH) repeat unit as the additional repeat unit. Specifically, the polyhydroxyalkanoate-based polymer may comprise a PHBH copolymer (3HB-co-3HH) of 3-hydroxybutyrate (3HB) and 3-hydroxyhexanoate (3HH). As a result, it is possible to enhance mechanical properties, flexibility, and low noise levels while securing tensile properties suitable for the stretching process.

The polyhydroxyalkanoate-based polymer may comprise the additional repeat unit in an amount of 10% by mole or more or 11% by mole or more. In addition, the polyhydroxyalkanoate-based polymer may comprise the additional repeat unit in an amount of 20% by mole or less, 18% by mole or less, 16% by mole or less, 15% by mole or less, 14% by mole or less, 13% by mole or less, or 11% by mole or less. For example, the polyhydroxyalkanoate-based polymer may comprise the additional repeat unit in an amount of 10% by mole to 20% by mole, 10% by mole to 18% by mole, 10% by mole to 16% by mole, 10% by mole to 15% by mole, 10% by mole to 14% by mole, 10% by mole to 13% by mole, or 10% by mole to 11% by mole.

Specifically, the polyhydroxyalkanoate-based polymer, as a PHBH copolymer (3HB-co-3HH), may comprise a 3-hydroxyhexanoate (3HH) repeat unit in an amount of 10% by mole to 20% by mole, 10% by mole to 18% by mole, 10% by mole to 16% by mole, 10% by mole to 15% by mole, 10% by mole to 14% by mole, 10% by mole to 13% by mole, or 10% by mole to 11% by mole. Within the above range, the flexibility and noise reduction effects can be further improved while maintaining the excellent mechanical properties of the film.

The polyhydroxyalkanoate-based polymer may have a melt viscosity at 160°C of 4,000 poise or more, 5,000 poise or more, 6,000 poise or more, 7,000 poise or more, 8,000 poise or more, or 9,000 poise or more. The polyhydroxyalkanoate-based polymer may have a melt viscosity at 160°C of 14,000 poise or less, 13,000 poise or less, 12,000 poise or less, or 11,000 poise or less. For example, the melt viscosity at 160°C of the polyhydroxyalkanoate-based polymer may be 4,000 poise to 14,000 poise, 5,000 poise to 13,000 poise, 6,000 poise to 12,000 poise, 7,000 poise to 11,000 poise, 8,000 poise to 11,000 poise, or 9,000 poise to 11,000 poise. The melt viscosity may be measured by Rheometrics Dynamic Spectrometry (RDS) using a rheometer.

In an embodiment, the polyhydroxyalkanoate-based polymer may have a weight average molecular weight (Mw) of 50,000 g/mole to 400,000 g/mole, for example, 50,000 g/mole to 300,000 g/mole, 50,000 g/mole to 200,000 g/mole, or 50,000 g/mole to 100,000 g/mole. The weight average molecular weight (Mw) may be measured by gel permeation chromatography (GPC).

When the polyhydroxyalkanoate-based polymer has a weight average molecular weight (Mw) within the above range, compatibility with the polylactic acid-based polymer and/or the first composition may be excellent, and the processability of the film may be further enhanced. As a result, the flexibility, transparency, and low noise levels of the biaxially oriented film can be further improved while appropriate strength is maintained.

The biodegradable biaxially oriented film (100) comprises a first outer layer (130) and a second outer layer (140) respectively disposed on both sides of the core layer (105), for example, on the upper and lower sides.

The first outer layer (130) and the second outer layer (140) disposed on both sides of the core layer (105) comprise the first composition. For example, the first resin layer (110), the first outer layer (130), and the second outer layer (140) may comprise substantially the same resin components. As the resin layers positioned on the outer sides of the biodegradable biaxially oriented film (100) comprise the first composition comprising a polylactic acid-based polymer, the stretching process of the film can be more readily performed, and preparation workability such as moldability and processability can be improved. In addition, since the first composition is positioned on the surface of the biodegradable biaxially oriented film (100), the mechanical properties of the biaxially oriented film can be further enhanced.

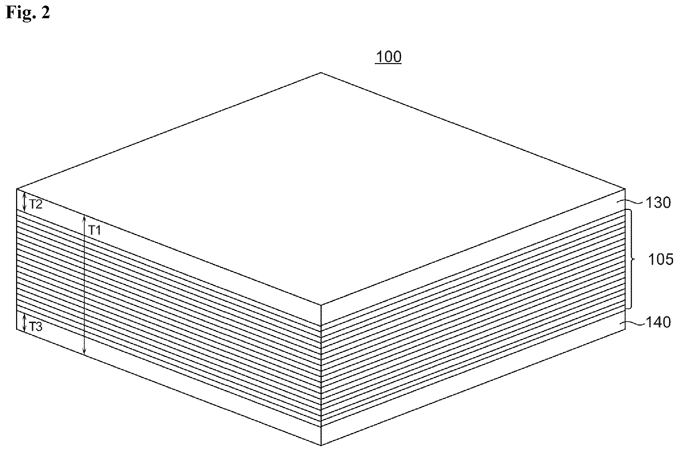

Fig. 2 is a schematic perspective view of a biodegradable biaxially oriented film according to an embodiment of the present invention.

The sum of the thickness (T2) of the first outer layer (130) and the thickness (T3) of the second outer layer (140) disposed on both sides of the core layer (105) may be 5% to 40% of the total thickness (T1) of the biodegradable biaxially oriented film (100). For example, the sum of the thicknesses (T2+T3) of the first outer layer (130) and the second outer layer (140) may be 5% or more, 10% or more, 15% or more, 20% or more, and 40% or less, 35% or less, or 30% or less, of the total thickness (T1) of the biodegradable biaxially oriented film (100). Specifically, the sum of the thicknesses of the first outer layer (130) and the second outer layer (140) may be 10% to 40%, 15% to 40%, 20% to 40%, 20% to 35%, or 20% to 30%, of the total thickness of the biodegradable biaxially oriented film (100). Within the above range, the stretching process of the film can be more readily performed, and moldability, processability, and productivity can be further enhanced. In addition, the mechanical properties, such as surface strength, of the biaxially oriented film can be improved, and the slip resistance, dimensional stability, and the like can be enhanced.

The thickness (T2) of the first outer layer (130) may be 2% or more, 5% or more, or 10% or more, and 30% or less, 25% or less, 20% or less, or 15% or less, of the total thickness (T1) of the biodegradable biaxially oriented film (100). In addition, the thickness (T3) of the second outer layer (140) may be 2% or more, 5% or more, or 10% or more, and 30% or less, 25% or less, 20% or less, or 15% or less, of the total thickness (T1) of the biodegradable biaxially oriented film (100). As the thickness (T2) of the first outer layer (130) and the thickness (T3) of the second outer layer (140) each satisfy the above ranges, the mechanical properties of the biodegradable biaxially oriented film (100) can be further enhanced, while the stability of the film, such as thermal characteristics and durability, can be further improved.

In an embodiment, the resin layers of the core layer (105) in contact with the first outer layer (130) and the second outer layer (140) may each be a second resin layer (120). In another embodiment, the resin layers of the core layer (105) in contact with the first outer layer (130) and the second outer layer (140) may each be a first resin layer (110).

In an embodiment, the first composition may comprise the polylactic acid-based polymer alone as a resin component. For example, the first resin layer (110), the first outer layer (130), and the second outer layer (140) may comprise the polylactic acid-based polymer alone as a resin component.

In another embodiment, the first composition may further comprise another aliphatic polyester-based polymer in addition to the polylactic acid-based polymer.

For example, the first composition may further comprise at least one aliphatic polyester-based polymer selected from the group consisting of a polyhydroxyalkanoate (PHA)-based polymer, a polybutylene adipate (PBA)-based polymer, a polybutylene succinate (PBS)-based polymer, a polycaprolactone (PCL)-based polymer, a polybutylene succinate-adipate (PBSA)-based polymer, and a polybutylene adipate terephthalate (PBAT)-based polymer.

Specifically, the first composition may comprise at least one aliphatic polyester-based polymer selected from the group consisting of a polyhydroxyalkanoate-based polymer, a polycaprolactone-based polymer, a polybutylene succinate-based polymer, and a polybutylene adipate-based polymer, together with the polylactic acid-based polymer. As a result, the biodegradability of the biodegradable biaxially oriented film (100) can be further enhanced, and flexibility can be further increased.

More specifically, the first composition may further comprise a polyhydroxyalkanoate-based polymer together with the polylactic acid-based polymer. The polyhydroxyalkanoate-based polymer contained in the first composition and the polyhydroxyalkanoate-based polymer contained in the second composition may be the same polymer. As a result, the mechanical properties of the biodegradable biaxially oriented film (100) can be maintained to be excellent while the noise reduction effects and flexibility can be further improved.

When the first composition comprises both the polylactic acid-based polymer and the polyhydroxyalkanoate-based polymer, the content of the polylactic acid-based polymer may be 30% by weight or more, 40% by weight or more, 50% by weight or more, or 60% by weight or more, based on the total weight of the first composition. Alternatively, the content of the polylactic acid-based polymer may be 70% by weight or less, 60% by weight or less, or 50% by weight or less, based on the total weight of the first composition.

The content of the polylactic acid-based polymer may be 30% by weight to 70% by weight based on the total weight of the first composition. For example, the content of the polylactic acid-based polymer may be 40% by weight to 60% by weight, 30% by weight to 50% by weight, 40% by weight to 50% by weight, 50% by weight to 70% by weight, or 60% by weight to 70% by weight, based on the total weight of the first composition. Within the above range, the flexibility and biodegradability can be further enhanced while excellent mechanical properties and optical characteristics of the biodegradable biaxially oriented film (100) are maintained, and the noise level of the film can be further reduced.

When the first composition comprises both the polylactic acid-based polymer and the polyhydroxyalkanoate-based polymer, the content of the polyhydroxyalkanoate-based polymer contained in the first composition may be 30% by weight or more, 40% by weight or more, or 50% by weight or more, based on the total weight of the first composition. Alternatively, the content of the polyhydroxyalkanoate-based polymer contained in the first composition may be 70% by weight or less, 60% by weight or less, 50% by weight or less, or 40% by weight or less, based on the total weight of the first composition. For example, the content of the polyhydroxyalkanoate-based polymer may be 30% by weight to 70% by weight, 40% by weight to 60% by weight, 50% by weight to 70% by weight, 50% by weight to 60% by weight, 30% by weight to 50% by weight, or 30% by weight to 40% by weight, based on the total weight of the first composition.

In an embodiment, the second composition may comprise the polyhydroxyalkanoate-based polymer in an amount of 70% by weight or more, 80% by weight or more, 90% by weight or more, 95% by weight or more, or 97% by weight or more, based on the total weight of the second composition. In addition, the polyhydroxyalkanoate-based polymer may be employed in an amount of 99% by weight or more or 99.9% by weight or more based on the total weight of the second composition. For example, the second composition may comprise the polyhydroxyalkanoate-based polymer alone as a resin component.

The content of the polyhydroxyalkanoate-based polymer may be 20% by weight or more, 25% by weight or more, 30% by weight or more, 50% by weight or more, or 60% by weight or more, and may be 80% by weight or less, 75% by weight or less, 70% by weight or less, 65% by weight or less, or 60% by weight or less, based on the total weight of the first composition and the second composition contained in the biodegradable biaxially oriented film (100) (i.e., the core layer (105), the first outer layer (130), and the second outer layer (140)). Within the above range, the biodegradable biaxially oriented film (100) can be biodegraded even under mild composting conditions such as being landfilled, whereby it can have environmentally friendly characteristics. In addition, the film can have excellent mechanical properties and optical characteristics while the noise reduction effects and flexibility are significantly enhanced.

Specifically, the content of the polyhydroxyalkanoate-based polymer may be 20% by weight to 80% by weight, 25% by weight to 80% by weight, 25% by weight to 75% by weight, 30% by weight to 70% by weight, 50% by weight to 75% by weight, or 50% by weight to 70% by weight, based on the total weight of the first composition and the second composition contained in the biodegradable biaxially oriented film (100).

The content of the polylactic acid-based polymer may be 20% by weight or more, 25% by weight or more, 30% by weight or more, 35% by weight or more, or 40% by weight or more, and may be 80% by weight or less, 75% by weight or less, 70% by weight or less, 50% by weight or less, or 40% by weight or less, based on the total weight of the first composition and the second composition contained in the biodegradable biaxially oriented film (100) (i.e., the core layer (105), the first outer layer (130), and the second outer layer (140)).

Specifically, the content of the polylactic acid-based polymer may be 20% by weight to 80% by weight, 20% by weight to 75% by weight, 25% by weight to 75% by weight, 30% by weight to 70% by weight, 25% by weight to 50% by weight, or 30% by weight to 50% by weight, based on the total weight of the first composition and the second composition contained in the biodegradable biaxially oriented film (100).

In an embodiment, the biodegradable biaxially oriented film (100) may comprise the polyhydroxyalkanoate-based polymer in a higher content than the polylactic acid-based polymer. In another embodiment, the biodegradable biaxially oriented film (100) may comprise the polylactic acid-based polymer in a higher content than the polyhydroxyalkanoate-based polymer.

The ratio of the total weight of the second composition to the total weight of the first composition contained in the biodegradable biaxially oriented film (100) may be 3:7 to 8:2. For example, the content of the first composition may be 30% by weight to 80% by weight, and the content of the second composition may be 20% by weight to 70% by weight, based on the total weight of the first composition and the second composition contained in the biodegradable biaxially oriented film (100).

The total weight of the first composition may refer to the sum of the total weights of the first resin layer (110), the first outer layer (130), and the second outer layer (140). In addition, the total weight of the second composition may refer to the total weight of the second resin layer (120). The weights of the first composition and the second composition contained in the biodegradable biaxially oriented film (100) can be controlled by the amounts discharged during the preparation process of the film.

In an embodiment, the ratio of the total weight of the second composition to the total weight of the first composition contained in the biodegradable biaxially oriented film (100) may be 3.5:6.5 to 8:2, 3.5:6.5 to 7.5:2.5, 4:6 to 7.5:2.5, 4:6 to 7:3, 4.5:5.5 to 7:3, 5:5 to 7:3, or 6:4 to 7:3. Within the above range, the thicknesses of the first outer layer (130) and the second outer layer (140) can be easily adjusted to a desired range, and the thickness of each of the first resin layer (110) and the second resin layer (120) within the core layer (105) can be appropriately adjusted so that the biodegradability and flexibility of the biodegradable biaxially oriented film (100) can be further enhanced, while low noise levels and excellent mechanical properties are maintained.

In an embodiment, the first composition and/or the second composition may further comprise conventional additives within a range that does not impair the effects of the present invention. For example, the additives may comprise electrostatic precipitators, antistatic agents, antioxidants, thermal stabilizers, ultraviolet ray blockers, antiblocking agents, and other inorganic lubricants, as needed.

The first composition and the second composition may be separately melt-extruded. The first composition and the second composition may be alternately laminated through extrusion or division sequence to form a multilayer film. Accordingly, the first composition may form a first resin layer (110), a first outer layer (130), and a second outer layer (140), and the second composition may form a second resin layer (120).

The mechanical properties of the entire biodegradable biaxially oriented film (100) can be maintained at a desired level by the first resin layer (110), and the noise generation during use of the film can be reduced by the interaction between the second resin layer (120) and the first resin layer (110).

The core layer (105) may have a laminated structure of 10 layers or more. For example, a first resin layer (110) and a second resin layer (120) may be alternately laminated in 10 layers or more to form the core layer (105).

Since the core layer (105) has a multilayer structure, biodegradability can be improved, and transparency can be enhanced. For example, as each individual resin layer (110, 120) comprising the polylactic acid-based polymer or the polyhydroxyalkanoate-based polymer is laminated with a thin thickness, penetration of microorganisms, oxygen, or the like into the inside of the film and each individual resin layer becomes easier, so that biodegradability can be enhanced, and haze can be reduced to improve optical characteristics.

In contrast, when a biaxially oriented film having a single-layer structure of a composition comprising the polylactic acid-based polymer and the polyhydroxyalkanoate-based polymer, a thick resin layer comprising the polylactic acid-based polymer may be formed, thereby reducing the effect of improving biodegradability, and haze may significantly increase to reduce transparency.

Specifically, the core layer (105) may have a multilayer structure in which the first resin layer (110) and the second resin layer (120) are alternately laminated in 10 layers or more, 27 layers or more, 54 layers or more, or 72 layers or more. In addition, the core layer (105) may have a multilayer structure in which the first resin layer (110) and the second resin layer (120) are alternately laminated in 512 layers or less, 256 layers or less, or 144 layers or less. In such a case, when the biodegradable biaxially oriented film (100) is applied to common packaging materials such as snack bags, the noise generated can be reduced, and the mechanical properties of the film such as strength can be maintained at a certain level or higher.

The biodegradable biaxially oriented film (100) may have a thickness of 1,000 µm or less, 800 µm or less, 600 µm or less, 400 µm or less, 200 µm or less, 100 µm or less, or 60 µm or less. The thickness of the biaxially oriented film may be 10 µm or more, 15 µm or more, or 20 µm or more.

The biodegradable biaxially oriented film (100) may have a haze of 11% or less, 10% or less, 9.5% or less, 9% or less, 8.5% or less, 8% or less, or 7.5% or less. In an embodiment, the biodegradable biaxially oriented film (100) may have a haze of 2% or more, 4% or more, or 5% or more. The film has excellent transparency within the above haze range and can be used for various purposes. The haze may be measured using a hazemeter (model name: SEP-H) from Nihon Semitsu Kogaku.

The biodegradable biaxially oriented film (100) may have an average Young's modulus of 250 kgf/mm² or less, 240 kgf/mm² or less, 230 kgf/mm² or less, 220 kgf/mm² or less, 210 kgf/mm² or less, 200 kgf/mm² or less, 198 kgf/mm² or less, 190 kgf/mm² or less, 180 kgf/mm² or less, or 170 kgf/mm² or less. In addition, the biodegradable biaxially oriented film (100) may have an average Young's modulus of 120 kgf/mm² or more, 150 kgf/mm² or more, or 160 kgf/mm² or more.

Specifically, the average Young's modulus of the biodegradable biaxially oriented film may be 120 kgf/mm² to 250 kgf/mm², 120 kgf/mm² to 240 kgf/mm², 120 kgf/mm² to 230 kgf/mm², 150 kgf/mm² to 230 kgf/mm², 150 kgf/mm² to 220 kgf/mm², 160 kgf/mm² to 220 kgf/mm², 160 kgf/mm² to 210 kgf/mm², 160 kgf/mm² to 200 kgf/mm², or 160 kgf/mm² to 190 kgf/mm². As the biodegradable biaxially oriented film (100) has an average Young's modulus within the above range, flexibility can be improved, and processability, moldability, and productivity can be further enhanced, and it can be suitably used as a packaging material.

The Young's modulus may be measured in accordance with ASTM D882. Specifically, the film is cut to 150 mm in length and 15 mm in width to prepare a specimen, the specimen is mounted on a tensile tester with a chuck spacing of 50 mm and tested at a tensile speed of 200 mm/minute. The slope value of the straight line between the starting point of measurement and the point where the elongation reaches 3% is obtained. The average Young's modulus of the biaxially oriented film may be obtained by measuring the Young's modulus of the film in the MD (machine direction) direction, which is the longitudinal direction of the film, and the TD (transverse direction) direction, which is the transverse direction of the film, and taking the average value.

The noise level of the biodegradable biaxially oriented film (100) may be measured using a noise analyzer. For example, the length and width of the biodegradable biaxially oriented film (100) are cut to an A4 size to prepare a sample for measurement, the long end of the measurement sample is fixed to a bar placed in a box blocking external noise with a jig, and the bar is rotated to generate noise in the sample. Specifically, the distance between the end where the measuring part of the noise analyzer is placed and the film is approximately 15 cm, and the noise level generated by rotating the bar 120 degrees at a speed of 400 rpm may be measured.

When the thickness of the biodegradable biaxially oriented film (100) is about 20 µm, the noise level of the biaxially oriented film measured in the evaluation of film noise level may be 70 dB or less, 65 dB or less, 62 dB or less, 60 dB or less, 58 dB or less, 56 dB or less, 55 dB or less, or 54 dB or less. As the biaxially oriented film has a low noise level, it can be applied to various fields as an environmentally friendly packaging material such as disposable packaging materials and food packaging materials.

Meanwhile, a coating layer or a printing layer may be formed on one side of the surfaces of the biodegradable biaxially oriented film within a range that does not impair the effect of the present invention. For example, an inorganic particle coating layer or a primer coating layer may be formed for antistatic or anti-blocking purposes.

### [Process for preparing a biodegradable biaxially oriented film]

In an embodiment of the present invention, there is provided a process for preparing a biodegradable biaxially oriented film according to the above embodiments, which comprises preparing a first composition comprising a polylactic acid-based polymer and a second composition comprising a polyhydroxyalkanoate-based polymer, respectively (e.g., step S10); melt-extruding the first composition and the second composition, respectively, to obtain a sheet in which a resin layer comprising the first composition and a resin layer comprising the second composition are alternately laminated (e.g., step S20); and biaxially stretching and heat-setting the laminated sheet to obtain a biaxially oriented film (e.g., step S30), wherein the content of the polyhydroxyalkanoate-based polymer is 20% by weight or more based on the total weight of the first composition and the second composition.

In step S 10, a first composition comprising a polylactic acid-based polymer and a second composition comprising a polyhydroxyalkanoate-based polymer may be prepared respectively. The content of the polyhydroxyalkanoate-based polymer is 20% by weight or more based on the total weight of the first composition and the second composition.

The first composition may be applied to a first resin layer of the biodegradable biaxially oriented film, and the second composition may be applied to a second resin layer of the biodegradable biaxially oriented film.

Unless otherwise specifically stated, any description overlapping with that described in the biodegradable biaxially oriented film for the first composition and the second composition is omitted.

The first composition and the second composition may be prepared in the form of chips, respectively. As the compositions have the form of chips, they can be easily stored and can be easily applied in a melting process, for example, in step S20.

Step S10 may further comprise a drying process for drying each of the first composition and the second composition.

The drying process may be carried out at a temperature of 40°C or higher, for example, 50°C or higher, 60°C or higher, or 70°C or higher. In addition, the drying process may be carried out at a temperature of 80°C or lower or 70°C or lower. For example, the drying process may be carried out at 40°C to 90°C, 50°C to 80°C, or 60°C to 80°C.

The drying process may be carried out for 2 hours to 24 hours, for example, for 3 hours to 12 hours, 6 hours to 12 hours, 6 hours to 10 hours, or 3 hours to 8 hours.

For example, the drying process may be carried out at 60°C to 80°C for 6 hours to 12 hours.

The drying process may be carried out using a dehumidifying dryer such as a hot air dryer.

In step S20, the first composition and the second composition may be melt-extruded, respectively. For example, the first composition and the second composition are melted to form each molten resin, and each resin layer may be formed from the molten resin.

Step S20 may be carried out using two extruders and a laminating means (e.g., a multilayer feed block) in which two layers are alternately laminated. The first composition and the second composition may be melt-extruded by the extruders, respectively. In addition, the molten resin of the first composition and the molten resin of the second composition are divided within the laminating means, and a laminate may then be obtained in which a first resin layer derived from the molten resin of the first composition and a second resin layer derived from the molten resin of the second composition are alternately laminated.

The laminate may have a multilayer structure in which the first resin layer and the second resin layer are alternately laminated in 10 layers or more, 27 layers or more, 54 layers or more, or 72 layers or more. In another embodiment, the laminate may have a multilayer structure in which the first resin layer and the second resin layer are alternately laminated in 512 layers or less, 256 layers or less, or 144 layers or less.

The melt-extrusion temperature of the first composition and the melt-extrusion temperature of the second composition may be the same or different. Optionally, the melt-extrusion temperature of the first composition and the melt-extrusion temperature of the second composition may be the same. The difference between the melt-extrusion temperature of the first composition and the melt-extrusion temperature of the second composition may be less than 30°C, for example, 25°C or less, 20°C or less, 15°C or less, 10°C or less, or 5°C or less.

The melt-extrusion temperatures of the first composition and the second composition may each be 200°C or lower, for example, 190°C or lower, 180°C or lower, or 170°C or lower. In addition, the melt-extrusion temperatures of the first composition and the second composition may each be 120°C or higher, for example, 130°C or higher, 140°C or higher, or 150°C or higher. Specifically, the melt-extrusion temperatures of the first composition and the second composition may each be 120°C to 200°C, for example, 130°C to 190°C, 140°C to 180°C, 140°C to 170°C, or 150°C to 170°C.

The laminate in which the first resin layer and the second resin layer are alternately laminated is passed through a die and brought into contact with a cooling roll cooled to about 10°C to 40°C to obtain an unoriented multilayer sheet.

The unoriented multilayer sheet comprises a first skin layer and a second skin layer respectively disposed on both sides of the laminate, for example, the lower side and the upper side. The skin layers may be formed by melt-extruding the first composition. The laminate corresponds to the core layer of the biodegradable biaxially oriented film after the stretching process, and the skin layers correspond to the outer layers of the biodegradable biaxially oriented film after the stretching process. That is, each of the outer layers on both sides of the sheet may be a resin layer comprising the first composition.

In an embodiment, the skin layers may be formed together in the step of forming the laminate. For example, the first composition may be melt-extruded onto the upper and lower sides of the laminate, so that a skin layer comprising the first composition may be formed on both sides of the laminate.

In the procedure of preparing the unoriented multilayer sheet, the ratio (mass ratio) of the total discharge amount of the first composition and the total discharge amount of the second composition may be 3:7 to 8:2, 3.5:6.5 to 8:2, 3.5:6.5 to 7.5:2.5, 4:6 to 7.5:2.5, 4:6 to 7:3, 4.5:5.5 to 7:3, 5:5 to 7:3, or 6:4 to 7:3.

In step S30, the unoriented sheet may be stretched to prepare a biodegradable biaxially oriented film. Step S30 may further comprise a heat-setting process after the stretching process.

Specifically, the stretching is a biaxial stretching and may be, for example, a sequential biaxial stretching.

The stretching process may comprise stretching in the longitudinal direction (MD) and stretching in the transverse direction (TD). For example, the stretching process may be carried out by stretching the unoriented sheet in the longitudinal direction and then stretching it in the transverse direction.

Step S30 may comprise preheating the unoriented sheet prior to the stretching process, wherein the unoriented sheet may be preheated to a temperature of 50°C to 80°C in the preheating step.

The stretching in the longitudinal direction (MD) may be carried out 2 to 4 times at 50°C to 100°C. For example, the stretching in the longitudinal direction (MD) may be carried out 2.5 to 3.5 times or 2.7 to 3.2 times at 55°C to 85°C or 60°C to 80°C.

The stretching in the transverse direction (TD) may be carried out 3 to 5 times at 60°C to 110°C. For example, the stretching in the transverse direction (TD) may be carried out 3.5 to 5 times or 3.5 to 4.5 times at 65°C to 100°C or 75°C to 95°C.

As the unoriented multilayer sheet is biaxially stretched in both directions, the arrangement of polymers and the degree of crystallization within the multilayer film can be controlled, so that the mechanical properties and stability can be further enhanced, whereby a high-quality packaging material can be obtained.

The heat-setting step may be carried out by leaving the film at a predetermined temperature. The heat-setting step can further enhance the mechanical properties and dimensional stability of the biaxially oriented film.

The heat-setting step may be carried out at 50°C to 150°C, 70°C to 150°C, 90°C to 140°C, 100°C to 140°C, 110°C to 140°C, or 110°C to 130°C. In addition, the heat-setting step may be carried out with a relaxation rate of 3% or less, 2% or less, or 1.5% or less. The heat-setting step may be carried out for 1 second or more or 3 seconds or more, and 60 seconds or less, 30 seconds or less, 15 seconds or less.

In an embodiment, a step of forming a coating layer and/or a printing layer on one side of the biaxially oriented film may be further carried out.

In an embodiment, a step of subjecting the biaxially oriented film to corona treatment may be further carried out. The corona treatment step may be carried out before the step of forming a coating layer or a printing layer.

In the step of corona treatment, corona discharge treatment, which is usually applied to the surface of a film, can be applied to biaxially oriented film. For example, when high-frequency and high-voltage output is applied between a discharge electrode and a treatment roll, corona discharge takes place. Here, corona treatment can be carried out by passing the surface of the biaxially oriented film through it.

The corona discharge treatment can activate the reactive groups on the surface of the biaxially oriented film or modify the surface chemically or physically, thereby further improving the adhesion, printability, coatability, and deposition characteristics.

### [Environmentally friendly packaging material]

In an embodiment of the present invention, there is provided an environmentally friendly packaging material, which comprises a biodegradable biaxially oriented film, wherein the biodegradable biaxially oriented film comprises a first outer layer; a second outer layer; and a core layer interposed between the first outer layer and the second outer layer, wherein the core layer has a multilayer structure in which a first resin layer and a second resin layer are alternately laminated, the first resin layer comprises a first composition comprising a polylactic acid-based polymer, the second resin layer comprises a second composition comprising a polyhydroxyalkanoate-based polymer, and the first outer layer and the second outer layer each comprise the first composition, wherein the content of the polyhydroxyalkanoate-based polymer is 20% by weight or more based on the total weight of the first composition and the second composition contained in the first outer layer, the second outer layer, and the core layer.

The environmentally friendly packaging material comprises a biodegradable biaxially oriented film according to the embodiments described above. Unless otherwise specifically stated, any description overlapping with that described for the biodegradable biaxially oriented film is omitted.

The environmentally friendly packaging material may be in the form of a film or a sheet that can be used as common disposable films and food packaging materials, in the form of a fiber that can be used as fabrics, knitted fabrics, nonwoven fabrics, ropes, or in the form of a container that can be used as a container for food packaging such as a lunch box.

The biodegradable biaxially oriented film can be applied to the environmentally friendly packaging material as it is, and it can also be applied together with metal foil, color layers, or the like.

As the environmentally friendly packaging material comprises a biodegradable biaxially oriented film with a low noise level, along with excellent flexibility, transparency, and mechanical properties, it can provide excellent physical properties and quality. In addition, as the biodegradable biaxially oriented film has a high degree of biodegradability even in the household or soil composting standards, whereby it can be completely decomposed when landfilled so as to be environmentally friendly, it can be widely used in various fields as a packaging material.

Hereinafter, the present invention will be described in more detail with reference to the following examples. However, these examples are provided only for illustration purposes, and the present invention is not limited thereto.

### [Example]

### Example 1: Preparation of a multilayer biodegradable film (1)

A first composition comprising a polylactic acid (PLA) polymer and a second composition comprising a polyhydroxyalkanoate (PHA) polymer were prepared.

A polylactic acid copolymer (NatureWorks 3052D) having a D-lactide content of about 3% by mole to 5% by mole and a melt flow index (MI) of about 14.0 g/10 minutes at 210°C and 2.16 kg was used as the PLA polymer. A PHBH (poly(3-hydroxybutylate-co-3-hydroxyhexanoate), 3HB-co-3HH) copolymer having a content of 3-hydroxyhexanoate (3HH) repeat unit of 10 to 11% by mole and a melt viscosity of about 9,000 to 11,000 poise at 160°C was used as the PHA polymer.

The first composition was dried in a dehumidifying dryer at about 70°C for 4 hours, and the second composition was dried in a dehumidifying dryer at about 70°C for 4 hours, to remove moisture. Then, two extruders and a multilayer feed block for alternately laminating two layers were used in which the first composition was melt-extruded using one extruder at a temperature of 160°C, and the second composition was melt-extruded using the other extruder at a temperature of 160°C. The ratio of the discharge amounts of the first composition and the second composition was 70:30.

In the multilayer feed block, the first resin layer comprising the first composition was divided into 37 layers, the second resin layer comprising the second composition was divided into 36 layers, and then the first resin layer and the second resin layer were alternately laminated. In such an event, the first resin layer was positioned on each of the outer layers of the upper and lower sides, and each of the outer layers had a thickness of 10% of the total thickness of the sheet. Thereafter, it was passed through a 780-mm die and brought into contact with a cooling roll cooled to about 20°C to obtain an unoriented multilayer sheet having 73 layers (2 outer layers on both sides and a core layer of 71 layers).

The unoriented multilayer sheet was stretched 3.0 times in the longitudinal direction at about 65°C and 4.0 times in the transverse direction at 85°C, heat set at 120°C, and given a relaxation rate of 1% to prepare a biaxially oriented multilayer film having a thickness of 20 µm.

### Example 2: Preparation of a multilayer biodegradable film (2)

A biaxially oriented multilayer film was prepared in the same manner as in Example 1, except that the ratio of the discharge amounts of the first composition and the second composition was adjusted to 40:60.

### Example 3: Preparation of a multilayer biodegradable film (3)

A first composition comprising 60% by weight of a polylactic acid (PLA) polymer and 40% by weight of a polyhydroxyalkanoate (PHA) polymer and a second composition comprising a polyhydroxyalkanoate (PHA) polymer were prepared. The same copolymers as in Example 1 were used as the PLA polymer and the PHA polymer.

The first composition was dried in a dehumidifying dryer at about 70°C for 4 hours, and the second composition was dried in a dehumidifying dryer at about 70°C for 4 hours, to remove moisture. Then, two extruders and a multilayer feed block for alternately laminating two layers were used in which the first composition was melt-extruded using one extruder at a temperature of 160°C, and the second composition was melt-extruded using the other extruder at a temperature of 160°C. The ratio of the discharge amounts of the first composition and the second composition was 70:30.

In the multilayer feed block, the first resin layer comprising the first composition was divided into 37 layers, the second resin layer comprising the second composition was divided into 36 layers, and then the first resin layer and the second resin layer were alternately laminated. In such an event, the first resin layer was positioned on each of the outer layers of the upper and lower sides, and each of the outer layers had a thickness of 10% of the total thickness of the sheet. Thereafter, it was passed through a 780-mm die and brought into contact with a cooling roll cooled to about 20°C to obtain an unoriented multilayer sheet having 73 layers (2 outer layers on both sides and a core layer of 71 layers).

The unoriented multilayer sheet was stretched 3.0 times in the longitudinal direction at about 65°C and 4.0 times in the transverse direction at 85°C, heat set at 120°C, and given a relaxation rate of 1% to prepare a biaxially oriented multilayer film having a thickness of 20 µm.

### Example 4: Preparation of a multilayer biodegradable film (4)

A biaxially oriented multilayer film was prepared in the same manner as in Example 3, except that the ratio of the discharge amounts of the first composition and the second composition was adjusted to 50:50.

### Example 5: Preparation of a multilayer biodegradable film (5)

A biaxially oriented multilayer film was prepared in the same manner as in Example 3, except that a composition comprising 40% by weight of the PLA polymer and 60% by weight of the PHA polymer was used as the first composition.

### Comparative Example 1: Preparation of a single-layer biodegradable film (1)

A composition comprising a polylactic acid (PLA) polymer having a D-lactide content of about 1 to 3% by mole and a melt viscosity of about 7,000 to 12,000 poise at 210°C was prepared. The composition was dried in a dehumidifying dryer at about 80°C for about 6 hours to remove moisture. Thereafter, the composition was melt-extruded using an extruder at a temperature of 210°C, passed through a 780-mm die, and then brought into contact with a cooling roll cooled to 20°C to obtain an unoriented single-layer sheet. The unoriented single-layer sheet thus obtained was stretched 3.0 times in the longitudinal direction at 65°C and 3.8 times in the transverse direction at 120°C, heat set at 120°C, and given a relaxation rate of 1% to prepare a biaxially oriented single-layer film having a thickness of 20 µm.

### Comparative Example 2: Preparation of a single-layer biodegradable film (2)

The PLA polymer and the PHA polymer used in Example 1 were hand-mixed at a weight ratio of 40:60 and then blended in a 45-mm phi twin-screw extruder at 160°C. Thereafter, it was dried in a dehumidifying dryer at about 60°C for 8 hours and then melt-extruded at 160°C to obtain an unoriented single-layer film having a thickness of 20 µm.

### Comparative Example 3: Preparation of a single-layer biodegradable film (3)

The PLA polymer used in Comparative Example 1 and a polybutylene adipate terephthalate (PBAT) polymer having a melt viscosity of about 7,000 to 12,000 poise at 210°C and an aliphatic component content of about 50% by weight among the acid components were hand-mixed at a weight ratio of 80:20 and then blended in a 45-mm phi twin-screw extruder at 200°C. Thereafter, it was dried in a dehumidifying dryer at about 60°C for 8 hours and then melt-extruded at 200°C to obtain an unoriented single-layer film having a thickness of 30 µm.

### Comparative Example 4: Preparation of a single-layer biodegradable film (4)

A PLA polymer and a PHA polymer were hand-mixed at a weight ratio of 90: 10 and then blended in a 45-mm phi twin-screw extruder at 200°C.

The PLA polymer used in Example 1 was used as the above PLA polymer. A poly(3-hydroxybutylate-co-4-hydroxybutylate) copolymer (3HB-co-4HB) having a content of 30 to 35% by mole of 4-hydroxybutyrate (4HB) repeat unit was used as the above PHA polymer.

Thereafter, it was dried in a dehumidifying dryer at about 60°C for 8 hours. The composition was melt-extruded using an extruder at a temperature of 210°C, passed through a 780-mm die, and then brought into contact with a cooling roll cooled to 20°C to obtain an unoriented single-layer sheet. The unoriented single-layer sheet thus obtained was stretched 3.0 times in the longitudinal direction at 65°C and 3.8 times in the transverse direction at 120°C, heat set at 120°C, and given a relaxation rate of 1% to prepare a biaxially oriented single-layer film having a thickness of 20 µm.

### Comparative Example 5: Preparation of a multilayer biodegradable film (6)

A first composition comprising the PLA polymer used in Comparative Example 1 and a second composition comprising the PBAT polymer used in Comparative Example 3 were prepared.

The first composition was dried in a dehumidifying dryer at about 60°C for 8 hours, and the second composition was dried in a dehumidifying dryer at about 80°C for 2 hours, to remove moisture. Then, two extruders and a multilayer feed block for alternately laminating two layers were used in which the first composition was melt-extruded using one extruder at a temperature of 210°C, and the second composition was melt-extruded using the other extruder at a temperature of 210°C. The ratio of the discharge amounts of the first composition and the second composition was 70:30.

In the multilayer feed block, the first resin layer comprising the first composition was divided into 37 layers, the second resin layer comprising the second composition was divided into 36 layers, and then the first resin layer and the second resin layer were alternately laminated. In such an event, the first resin layer was positioned on each of the outer layers of the upper and lower sides, and each of the outer layers had a thickness of 10% of the total thickness of the sheet. Thereafter, it was passed through a 780-mm die and brought into contact with a cooling roll cooled to about 20°C to obtain an unoriented multilayer sheet having 73 layers (2 outer layers on both sides and a core layer of 71 layers).

The unoriented multilayer sheet was stretched 3.0 times in the longitudinal direction at about 65°C and 4.0 times in the transverse direction at 85°C, heat set at 120°C, and given a relaxation rate of 1% to prepare a biaxially oriented multilayer film having a thickness of 20 µm.

### Comparative Example 6: Preparation of a multilayer biodegradable film (7)

A first composition comprising 95.8% by weight of a PLA polymer and 4.2% by weight of a PHA polymer and a second composition comprising a PBAT polymer were prepared.

The PLA polymer used in Comparative Example 1 was used as the above PLA polymer. The PHA polymer (3HB-co-4HB) used in Comparative Example 4 was used as the above PHA polymer. The PBAT polymer used in Comparative Example 3 was used as the above PBAT polymer.

A biaxially oriented multilayer film having a thickness of 20 µm was prepared using the first composition and the second composition in the same manner as in Comparative Example 5.

### Evaluation Example

### Evaluation Example 1: Haze

The haze of the biodegradable films prepared in the Examples and Comparative Examples was measured according to the ASTM D1003 standard using a hazemeter (SEP-H) from Nihon Semitsu Kogaku.

### Evaluation Example 2: Film noise level

Each of the biodegradable films prepared in the Examples and Comparative Examples was cut to a size of A4, 210 mm × 297 mm and placed 15 cm away from a noise analyzer (Cirrus Research PlC, CR-162C) in a box of 650 (W) mm × 450 (D) mm × 500 (H) mm made of a polycarbonate. Both ends of the film were held with jigs and rotated 120 degrees at a speed of 400 rpm to generate noise for 30 seconds or longer. The noise was measured once per second for a total of 30 times. The average value of the above measured values was obtained.

### Evaluation Example 3: Average Young's modulus

According to ASTM D882, a specimen of each of the biodegradable films prepared in the Examples and Comparative Examples was prepared, cut to a size of 150 mm in length and 15 mm in width, mounted with a spacing between chucks of 50 mm, and tested at a tensile speed of 200 mm/minute using a tensile tester (Instron 5566A). The Young's modulus (kgf/mm²) was measured as a slope of the straight line between the starting point of measurement and an elongation of 3%. The Young's modulus was measured in the MD (machine direction) and TD (transverse direction) directions, respectively, and the average Young's modulus was calculated as the average value.

The characteristics, composition, and evaluation results of each layer of the biodegradable films prepared in the Examples and Comparative Examples are shown in Tables 1 and 2, respectively.

**[Table 1]**

| | | Ex. 1 | Ex. 2 | Ex. 3 | Ex. 4 | Ex. 5 |
|---|---|---|---|---|---|---|
| Film structure | | PLA/PHA lamination | | (PLA+PHA)/PHA lamination | | |
| First resin layer | Component | PLA | PLA | PLA+PHA | PLA+PHA | PLA+PHA |
| | Total number of the first resin layers excluding the outer layers on both sides | 35 | 35 | 35 | 35 | 35 |
| | PLA content (% by weight) | 100 | 100 | 60 | 60 | 40 |
| | PHA content (% by weight) | - | - | 40 | 40 | 60 |
| | Total content of the first resin layers including the outer layers on both sides | 70 | 40 | 70 | 50 | 70 |
| Second resin layer | Component | PHA | PHA | PHA | PHA | PHA |
| | Total number of the second resin layers | 36 | 36 | 36 | 36 | 36 |
| | Total content of the second resin layers (% by weight) | 30 | 60 | 30 | 50 | 30 |
| Resin content | PLA (% by weight) | 70 | 40 | 42 | 30 | 28 |
| | PHA(3HB-co-3HH) (% by weight) | 30 | 60 | 58 | 70 | 72 |
| | PHA(3HB-co-4HB) (% by weight) | - | - | - | - | - |
| | PBAT (% by weight) | - | - | - | - | - |
| Film properties | Thickness (µm) | 20 | 20 | 20 | 20 | 20 |
| | Total number of laminated layers including the outer layers on both sides | 73 | 73 | 73 | 73 | 73 |
| | Haze (%) | 7.4 | 7.8 | 8.3 | 9.2 | 9.6 |
| | Noise level (dB) | 63.5 | 57.4 | 55.5 | 53.7 | 53.2 |
| | Avg. Young's modulus (kgf/mm²) | 220 | 198 | 170 | 163 | 160 |

**[Table 2]**

| | | C. Ex. 1 | C. Ex. 2 | C. Ex. 3 | C. Ex. 4 | C. Ex. 5 | C. Ex. 6 |
|---|---|---|---|---|---|---|---|
| Film structure | | Single layer | | | | PLA/PBAT lamination | (PLA+PHA) /PBAT lamination |
| First resin layer | Component | PLA | PLA+ PHA | PLA+ PBAT | PLA+ PHA | PLA | PLA+PHA |
| | Total number of the first resin layers excluding the outer layers on both sides | 1 | 1 | 1 | 1 | 35 | 35 |
| | PLA content (% by weight) | 100 | 40 | 80 | 90 | 100 | 95.8 |
| | PHA content (% by weight) | - | 60 | - | 10 | - | 4.2 |
| | PBAT content (% by weight) | - | - | 20 | - | - | - |
| | Total content of the first resin layers including the outer layers on both sides | 100 | 100 | 100 | 100 | 70 | 70 |
| Second resin layer | Component | - | - | - | - | PBAT | PBAT |
| | Total number of the second resin layers | - | - | - | - | 36 | 36 |
| | Total content of the second resin layers (% by weight) | - | - | - | - | 30 | 30 |
| Resin content | PLA (% by weight) | 100 | 40 | 80 | 90 | 70 | 65.8 |
| | PHA(3HB-co-3HH) (% by weight) | - | 60 | - | - | - | - |
| | PBAT (% by weight) | - | - | 20 | - | 30 | 30 |
| | PHA(3HB-co-4HB) (% by weight) | - | - | - | 10 | - | 4.2 |
| Film properties | Thickness (µm) | 20 | 20 | 30 | 20 | 20 | 20 |
| | Total number of laminated layers including the outer layers on both sides | 1 | 1 | 1 | 1 | 73 | 73 |
| | Haze (%) | 1.5 | 15 | 25 | 11.4 | 4.0 | 7.5 |
| | Noise level (dB) | 73.8 | 56.2 | 72.6 | 69.2 | 72.2 | 67.5 |
| | Avg. Young's modulus (kgf/mm²) | 384 | 172 | 173 | 330 | 288 | 274 |

Referring to Tables 1 and 2 above, the multilayer biodegradable films prepared in Examples 1 to 5 were overall superior to the single-layer or multilayer biodegradable sheets and films prepared in Comparative Examples 1 to 6 in terms of such properties as transparency, noise level, and flexibility.

Specifically, the single-layer biodegradable film of Comparative Example 1 showed a high noise level of 73.8 dB as it comprised a polylactic acid polymer alone, and it had a Young's modulus of 384 kgf/mm², indicating poor flexibility. In the single-layer biodegradable films of Comparative Examples 2 to 4, a polylactic acid polymer was mixed with a PHA(3HB-co-3HH) polymer, a PHA(3HB-co-4HB) polymer, and a PBAT polymer, respectively; however, the haze increased to 15%, 25%, and 11.4%, respectively, resulting in a decrease in transparency. In addition, the single-layer biodegradable films of Comparative Examples 3 and 4 still showed high noise levels of 72.6 dB and 69.2 dB, respectively, and the single-layer biodegradable film of Comparative Example 4 had a high average Young's modulus of 330 kgf/mm².

In addition, the multilayer biodegradable films of Comparative Examples 5 and 6 showed high noise levels of 72.2 dB and 67.5 dB, respectively, and the average Young's modulus was 288 kgf/mm² and 274 kgf/mm², indicating poor flexibility.

In contrast, as to flexibility and noise level, the multilayer biodegradable films of Examples 1 to 5 had noise levels of 63.5 dB or less and Young's moduli of 160 to 220 kgf/mm², indicating enhanced flexibility and reduced noise levels. In addition, as to transparency, the haze of the multilayer biodegradable films of the Examples was all measured to be 9.6% or less, indicating that excellent transparency was secured, along with improved noise levels and average Young's moduli.

Accordingly, the multilayer biodegradable films of the embodiments of the present invention not only have excellent biodegradability, but also have excellent flexibility, noise level, and transparency of the final films. Thus, they can be used in an environmentally friendly manner for various purposes, including packaging purposes such as food packaging materials.

### Explanation of Reference Numerals

- 100:: biodegradable biaxially oriented film
- 105:: core layer
- 110:: first resin layer
- 120:: second resin layer
- 130:: first outer layer
- 140:: second outer layer

### Certain Embodiments of the Present Disclosure

Certain embodiments of the present disclosure are as follows:

### [Embodiment 1]

A biodegradable biaxially oriented film, which comprises a first outer layer; a second outer layer; and a core layer interposed between the first outer layer and the second outer layer,
wherein the core layer has a multilayer structure in which a first resin layer and a second resin layer are alternately laminated,
the first resin layer comprises a first composition comprising a polylactic acid-based polymer,
the second resin layer comprises a second composition comprising a polyhydroxyalkanoate-based polymer, and
the first outer layer and the second outer layer each comprise the first composition,
wherein the content of the polyhydroxyalkanoate-based polymer is 20% by weight or more based on the total weight of the first composition and the second composition contained in the first outer layer, the second outer layer, and the core layer.

### [Embodiment 2]

The biodegradable biaxially oriented film of embodiment 1, wherein the core layer has a laminated structure of 10 layers or more.

### [Embodiment 3]

The biodegradable biaxially oriented film of embodiment 1, wherein the first composition further comprises at least one aliphatic polyester-based polymer selected from the group consisting of a polyhydroxyalkanoate-based polymer, a polycaprolactone-based polymer, a polybutylene succinate-based polymer, and a polybutylene adipate-based polymer.

### [Embodiment 4]

The biodegradable biaxially oriented film of embodiment 3, wherein the first composition further comprises the polyhydroxyalkanoate-based polymer.

### [Embodiment 5]

The biodegradable biaxially oriented film of embodiment 3, wherein the content of the polylactic acid-based polymer is 30% by weight to 70% by weight based on the total weight of the first composition.

### [Embodiment 6]

The biodegradable biaxially oriented film of embodiment 1, wherein the content of the first composition is 30% by weight to 80% by weight based on the total weight of the first composition and the second composition contained in the biodegradable biaxially oriented film.

### [Embodiment 7]

The biodegradable biaxially oriented film of embodiment 1, wherein the content of the polylactic acid-based polymer is 20% by weight to 80% by weight based on the total weight of the first composition and the second composition contained in the biodegradable biaxially oriented film.

### [Embodiment 8]

The biodegradable biaxially oriented film of embodiment 1, wherein the polylactic acid-based polymer comprises D-lactic acid in an amount of 1% by mole to 12% by mole.

### [Embodiment 9]

The biodegradable biaxially oriented film of embodiment 1, wherein the polyhydroxyalkanoate-based polymer comprises a 3-hydroxybutyrate (3HB) repeat unit.

### [Embodiment 10]

The biodegradable biaxially oriented film of embodiment 9, wherein the polyhydroxyalkanoate-based polymer further comprises at least one additional repeat unit selected from the group consisting of 3-hydroxyhexanoate (3HH), 4-hydroxybutyrate (4HB), 3-hydroxyvalerate (3HV), 3-hydroxypropionate (3HP), 5-hydroxyvalerate (5HV), 5-hydroxyhexanoate (5HH), and 6-hydroxyhexanoate (6HH).

### [Embodiment 11]

The biodegradable biaxially oriented film of embodiment 10, wherein the polyhydroxyalkanoate-based polymer comprises the additional repeat unit in an amount of 10% by mole to 20% by mole.

### [Embodiment 12]

A process for preparing a biodegradable biaxially oriented film, which comprises:
preparing a first composition comprising a polylactic acid-based polymer and a second composition comprising a polyhydroxyalkanoate-based polymer, respectively;
melt-extruding the first composition and the second composition, respectively, to obtain a sheet in which a resin layer comprising the first composition and a resin layer comprising the second composition are alternately laminated; and
biaxially stretching and heat-setting the laminated sheet to obtain a biaxially oriented film,
wherein the content of the polyhydroxyalkanoate-based polymer is 20% by weight or more based on the total weight of the first composition and the second composition.

### [Embodiment 13]

The process for preparing a biodegradable biaxially oriented film of embodiment 12, wherein each of the outer layers on both sides of the sheet is the resin layer comprising the first composition.

### [Embodiment 14]

The process for preparing a biodegradable biaxially oriented film of embodiment 12, wherein the melt-extrusion temperature of the first composition and the melt-extrusion temperature of the second composition are the same.

### [Embodiment 15]

An environmentally friendly packaging material, which comprises a biodegradable biaxially oriented film,
wherein the biodegradable biaxially oriented film comprises a first outer layer; a second outer layer; and a core layer interposed between the first outer layer and the second outer layer,
wherein the core layer has a multilayer structure in which a first resin layer and a second resin layer are alternately laminated,
the first resin layer comprises a first composition comprising a polylactic acid-based polymer,
the second resin layer comprises a second composition comprising a polyhydroxyalkanoate-based polymer, and
the first outer layer and the second outer layer each comprise the first composition,
wherein the content of the polyhydroxyalkanoate-based polymer is 20% by weight or more based on the total weight of the first composition and the second composition contained in the first outer layer, the second outer layer, and the core layer.

## Claims

1. A biodegradable biaxially oriented film, which comprises a first outer layer; a second outer layer; and a core layer interposed between the first outer layer and the second outer layer,
wherein the core layer has a multilayer structure in which a first resin layer and a second resin layer are alternately laminated,
the first resin layer comprises a first composition comprising a polylactic acid-based polymer,
the second resin layer comprises a second composition comprising a polyhydroxyalkanoate-based polymer, and
the first outer layer and the second outer layer each comprise the first composition,
wherein the content of the polyhydroxyalkanoate-based polymer is 20% by weight or more based on the total weight of the first composition and the second composition contained in the first outer layer, the second outer layer, and the core layer.

2. The biodegradable biaxially oriented film of claim 1, wherein the core layer has a laminated structure of 10 layers or more.

3. The biodegradable biaxially oriented film of claim 1 or claim 2, wherein the first composition further comprises at least one aliphatic polyester-based polymer selected from the group consisting of a polyhydroxyalkanoate-based polymer, a polycaprolactone-based polymer, a polybutylene succinate-based polymer, and a polybutylene adipate-based polymer.

4. The biodegradable biaxially oriented film of any one of claims 1 to 3, wherein the first composition further comprises the polyhydroxyalkanoate-based polymer.

5. The biodegradable biaxially oriented film of any one of claims 1 to 4, wherein the content of the polylactic acid-based polymer is 30% by weight to 70% by weight based on the total weight of the first composition.

6. The biodegradable biaxially oriented film of any one of claims 1 to 5, wherein the content of the first composition is 30% by weight to 80% by weight based on the total weight of the first composition and the second composition contained in the biodegradable biaxially oriented film.

7. The biodegradable biaxially oriented film of any one of claims 1 to 6, wherein the content of the polylactic acid-based polymer is 20% by weight to 80% by weight based on the total weight of the first composition and the second composition contained in the biodegradable biaxially oriented film.

8. The biodegradable biaxially oriented film of any one of claims 1 to 7, wherein the polylactic acid-based polymer comprises D-lactic acid in an amount of 1% by mole to 12% by mole.

9. The biodegradable biaxially oriented film of any one of claims 1 to 8, wherein the polyhydroxyalkanoate-based polymer comprises a 3-hydroxybutyrate (3HB) repeat unit.

10. The biodegradable biaxially oriented film of claim 9, wherein the polyhydroxyalkanoate-based polymer further comprises at least one additional repeat unit selected from the group consisting of 3-hydroxyhexanoate (3HH), 4-hydroxybutyrate (4HB), 3-hydroxyvalerate (3HV), 3-hydroxypropionate (3HP), 5-hydroxyvalerate (5HV), 5-hydroxyhexanoate (5HH), and 6-hydroxyhexanoate (6HH).

11. The biodegradable biaxially oriented film of claim 10, wherein the polyhydroxyalkanoate-based polymer comprises the additional repeat unit in an amount of 10% by mole to 20% by mole.

12. A process for preparing a biodegradable biaxially oriented film, which comprises:
preparing a first composition comprising a polylactic acid-based polymer and a second composition comprising a polyhydroxyalkanoate-based polymer, respectively;
melt-extruding the first composition and the second composition, respectively, to obtain a sheet in which a resin layer comprising the first composition and a resin layer comprising the second composition are alternately laminated; and
biaxially stretching and heat-setting the laminated sheet to obtain a biaxially oriented film,
wherein the content of the polyhydroxyalkanoate-based polymer is 20% by weight or more based on the total weight of the first composition and the second composition.

13. The process for preparing a biodegradable biaxially oriented film of claim 12, wherein each of the outer layers on both sides of the sheet is the resin layer comprising the first composition.

14. The process for preparing a biodegradable biaxially oriented film of claim 12 or claim 13, wherein the melt-extrusion temperature of the first composition and the melt-extrusion temperature of the second composition are the same.

15. An environmentally friendly packaging material, which comprises a biodegradable biaxially oriented film as claimed in any one of claims 1 to 11.
